# EUROPEAN PATENT APPLICATION

(11) **EP 4 764 245 A1**
(43) Date of publication of application: **24.06.2026**
(21) Application number: 24383391.0
(22) Date of filing: 18.12.2024
(51) Int. Cl.: F16D 55/226, F16D 65/00, B60T 5/00, F16D 55/00, F16D 65/78

(54) **BRAKE CALIPER FOR A DISC BRAKE OF A VEHICLE**

(71) Applicant: J Juan, S.A., 08850 Gava (ES)
(72) Inventor: Ceprian Cortés, Juan Manuel, 08980 Sant Feliu de Llobregat (Barcelona) (ES)
(74) Representative: Clarke, Modet y Cía., S.L.

(57) **Abstract**

A brake caliper for a disc brake of a vehicle, comprising a caliper body (2) housing at least one piston (3); a first friction pad (5) and a second friction pad (6) configured to receive a disc brake (101), wherein the at least one piston (3) is configured to urge the friction pads (5, 6) towards respective faces (101a, 101b) of the disc brake (101) during a braking event; and heat dissipation means (7) configured to dissipate the heat produced during said event. The heat dissipation means (7) comprise a heat accumulation portion (71) in contact with at least one friction pad (5, 6), configured to accumulate the heat produced in said friction pad (5, 6); and a heat dissipation portion (72) in contact with the heat accumulation portion (71), configured to dissipate the heat accumulated in the heat accumulation portion (71) towards the outside of the brake caliper (1).

## Description

### Field of the invention

The present invention relates to a brake caliper for a disc brake of a vehicle, such as a motorcycle, bicycle, power e-bike, utility task vehicle (UTV), side-by-side vehicle (SSV), among other vehicles in general equipped with a disc brake system.

The present invention is specially designed to improve the heat dissipation produced in a brake caliper during a vehicle braking event.

### Background of the invention

A brake caliper for a disc brake of a vehicle normally comprises a caliper body housing at least one piston mounted in a cylinder, and two friction pads between which a disc brake is placed. During a vehicle braking event, the piston is hydraulically actuated to urge the friction pads towards the respective faces of said disc brake.

When the brake caliper is a floating brake caliper, a first of the two friction pads is configured to move with the piston, being pushed by the same, thus having a relative movement with the caliper body, whereas a second of the two friction pads is fixed to the caliper body. The caliper body is axially guided in a displaceable manner, so that when the piston pushes the first of the two friction pads towards a face of the disc brake, in reaction, it causes the movement of the second of the two friction pads towards the opposite face of the disc brake.

In any case, heat is usually produced close to the braking caliper during a vehicle braking event, especially due to the friction of the disc brake with the friction pads. This heat can damage the vehicle braking system and its operation mode, particularly in case the braking fluid is too much heated and reaches its boiling temperature.

For example, sensitive internal components, such as rubber seals, can become damaged if too much thermal energy accumulates inside the brake caliper. Similarly, electronics can become damaged due to excessive exposure to high temperatures in their external environments.

Also, in vehicle racing conditions high temperatures are reached during the braking operating mode, which may cause permanent damage of the caliper body, inner rubber seals, friction pads, etc. These elements working well if they work inside its working threshold.

Furthermore, reaching high temperatures in a brake caliper may cause many other drawbacks, as for example:
- deforming the brake caliper and/or other components of the same;
- exceeding the elastic limit of certain materials, such as rubber seals;
- reducing the braking efficiency, since when the braking fluid boils, the braking pressure is reduced; and/or
- altering the suitable working conditions, as for example when the frictions pads reach different temperatures respect to each other.

There are several prior art documents that refer to vehicle braking systems designed to improve the heat dissipation on brake calipers, to avoid the above-mentioned problems and drawbacks.

For example, document EP2905500A2 discloses a heat-dissipation structure of a brake pad including a main plate. The main plate has first and second heat-dissipation portions. The first heat-dissipation portion comprises a plurality of heat-dissipation pillars protruding from the main plate. The second heat-dissipation portion comprises a plurality of protrusions or recesses formed on the main plate. When the main plate is disposed on a caliper body, the first and the second heat-dissipation portions are exposed at two ends of the caliper body respectively to increase heat-dissipation area.

For example, document US2015090543A1 discloses a brake pad assembly for mounting on a caliper of a vehicle. It comprises a backing plate, a brake lining disposed on a front side of the backing plate, and a heat sink. The heat sink includes a thermal conductive sheet and a set of cooling fins mounted on a rear side of the thermal conductive sheet. The thermal conductive sheet is overlapped and releasably fastened on the backing plate.

For example, document DE102017211064A1 discloses a brake caliper housing for a vehicle with a hydraulic connection for coupling a brake fluid line. The brake caliper comprises cooling elements arranged radially spaced from the hydraulic connection. The cooling elements being rod-shaped and having a circular or oval cross-section.

The above-mentioned solutions share a similar problem. In particular, their heat dissipation means significatively increase the overall dimensions of the brake caliper. That is because they are provided with large protruding elements, such as the heat-dissipation pillars, protrusions or rod-shaped cooling elements, all of them extending from the caliper body. In addition, most of them further require a complex design, involving significant modifications and/or mechanizations of the brake pads, or the presence of multiple components, thus making more difficult its integration in the brake caliper.

The present invention solves the aforementioned problems by means of a compact configuration, wherein heat dissipation is enhanced without affecting the overall dimensions of the brake caliper and without the need to modify the brake pads, and which further facilities its assembly. This enhanced temperature management increases lifespan of the brake caliper and improves its performance.

### Description of the invention

The brake caliper for a disc brake of a vehicle of the present invention comprises:
- a caliper body housing at least one piston mounted in a cylinder, wherein said piston is actuated by a hydraulic fluid;
- a first friction pad and a second friction pad configured to receive a disc brake between them, wherein the at least one piston is configured to urge the friction pads towards respective faces of the disc brake during a vehicle braking event; and
- heat dissipation means configured to dissipate the heat produced by the friction of the friction pads with the disc brake during said vehicle braking event.

The brake caliper is characterized in that the heat dissipation means comprise:
- a heat accumulation portion placed in contact with at least one friction pad, configured to accumulate the heat produced in said friction pad; and
- a heat dissipation portion in contact with the heat accumulation portion, configured to dissipate the heat accumulated in the heat accumulation portion towards the outside of the brake caliper.

Thus, the heat dissipation means of the present invention perform the double function of accumulating the heat from the inside of the brake caliper, and of dissipating said heat towards the outside of the brake caliper. In this way, the heat is removed from the inside of the brake caliper to reduce the temperature of the hydraulic fluid, also known as brake fluid. This prevents to arise a dangerous temperature of the brake line containing said brake fluid, which may cause losing the performance of the brake fluid and/or damaging the brake line.

That is, in the present invention the thermal management is improved, increasing the time where the brake caliper can work at higher temperatures over the standard operating temperature ranges without producing damages.

Preferably, the heat accumulation portion has a size which is similar or smaller than the at least one friction pad, to maximise the transfer heating without significatively increase the overall dimensions of the brake caliper.

Preferably, the heat accumulation portion is formed by a disc-shaped or cylindrical-shaped portion. This configuration is very compact, thus facilitating its integration in the brake caliper. It is also provided with a flat surface which assures a maximum contact area with the at least one friction pad.

Preferably, the heat dissipation portion is formed by a heat sink provided with a plurality of cooling fins, thus increasing the dissipation of the heat accumulated in the heat accumulation portion towards the outside of the brake caliper.

Preferably, the heat dissipation portion comprises a first group of cooling fins axially distributed in a first direction, and a second group of cooling fins parallelly distributed in a second direction, wherein the first direction is perpendicular to the second direction. In this manner, a greater number of cooling fins can be distributed in the heat dissipation portion in a smaller space, thus making the heat dissipation means still more compact and not affecting the overall dimensions of the brake caliper. In addition, said distribution of the cooling fins also guarantees the heat transfer towards the external environment.

Preferably, the heat dissipation means further comprise:
- a heat insulating element placed between the heat accumulation portion and the caliper body, configured to insulate the caliper body from the heat accumulation portion.

The heat insulating element limits the contact area between the heat dissipation means and the caliper body, thus preventing that the heat accumulated in the heat accumulation portion is transferred to the caliper body. In other words, favouring that the heat accumulated in the heat accumulation portion is dissipated towards the outside of the brake caliper, isolating the caliper body from the heat accumulation portion, and thus impeding the heat transfer between them. Thus, increasing the efficiency of the heat dissipation means.

Preferably, the heat insulating element is formed by a fiber sheet or other insulating material.

Preferably, the heat insulating element is U-shaped. This configuration allows to selectively insulate a specific part of the heat dissipation means, i.e. the heat accumulation portion, from the caliper body. Thus, leaving exposed another part of the heat dissipation means, i.e. the heat dissipation portion, to the outside of the brake caliper. The U-shaped configuration is also provided with a considerable flat surface that further limits the contact area between the heat dissipation means and the caliper body. Finally, the U-shaped configuration of the heat insulating element also facilitates its integration in the heat dissipation means and makes them more compact and smaller.

Preferably, the heat dissipation means further comprise an anchoring element having:
- a magnet configured to be arranged in the heat accumulation portion; and
- a threaded end protruding from said magnet configured to be screwed in the heat dissipation portion.

The magnet is configured to be in contact with the at least one friction pad, interacting magnetically with the same, to guarantee permanent contact between said friction pad and the heat accumulation portion. In addition, this configuration of the anchoring element also facilitates the assembly of the heat dissipation means in the brake caliper.

Preferably, the magnet is cylindrical-shaped and configured to be lodged on a central recess of the heat accumulation portion. This configuration facilitates the integration of the magnet in the heat dissipation means and makes them more compact and smaller.

Preferably, the heat accumulation portion and the heat dissipation portion are integrally made, forming one single piece. This configuration makes the heat dissipation means more compact and robust, it favours the heat transfer between both portions, and it also facilitates the assembly of the heat dissipation means in the brake caliper.

Preferably, the heat accumulation portion and the heat dissipation portion are made of titanium, stainless steel, or brass, or from other metallic materials, or other materials with an appropriate thermal conductivity.

Preferably, the first friction pad is configured to move with the piston, having a relative movement with the caliper body, and the second friction pad is fixed to the caliper body, wherein the heat accumulation portion is placed in contact with the second friction pad.

According to a preferred embodiment of the present invention, the brake caliper is a floating brake caliper. The caliper body is axially guided in a displaceable manner, so that when the piston pushes the first friction pad towards a face of the disc brake, in reaction, it causes the movement of the second friction pad towards an opposite face of the disc brake.

Preferably, the caliper body comprises an opening configured to lodge the heat dissipation means. This configuration facilitates the integration and assembly of the heat dissipation means in the caliper body, without increasing the overall dimensions of the brake caliper.

### Brief description of the drawings

What follows is a very brief description of a series of drawings that aid in better understanding the invention, and which are expressly related to an embodiment of said invention that is presented by way of a non-limiting example of the same.
Figure 1 represents a first perspective view of a motorcycle which comprises a brake caliper according to the present invention.
Figure 2 represents the detail R of Figure 1.
Figure 3 represents a second perspective view of the motorcycle of Figure 1.
Figure 4 represents the detail S of Figure 3.
Figure 5 represents a first perspective view of the brake caliper of the present invention.
Figure 6 represents a second perspective view of the brake caliper of the present invention.
Figure 7 represents a front view of the brake caliper of the present invention.
Figure 8 represents a cross-section of the brake caliper along the P-P cut line of Figure 7.
Figure 9 represents the detail T of Figure 8.
Figure 10 represents an exploded view of the brake caliper of the present invention.
Figure 11 represents a first exploded view of the heat dissipation means of the brake caliper of the present invention.
Figure 12 represents a second exploded view of the heat dissipation means of the brake caliper of the present invention.

### Detailed description of the invention

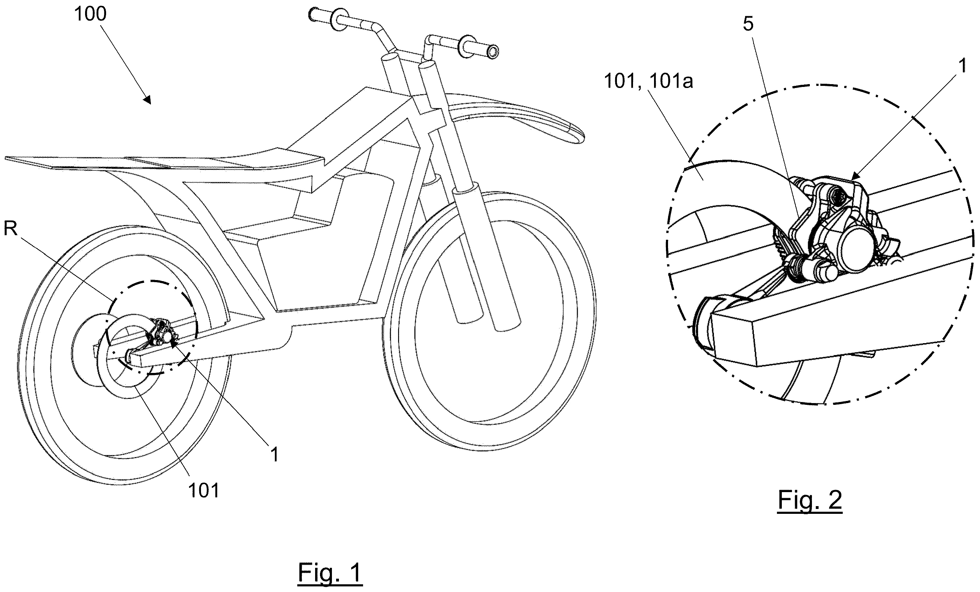

Figures 1 - 4 show several views and details of a vehicle (100), specifically a motorcycle, which comprises a brake caliper (1) according to the present invention. The brake caliper (1) is placed on a disc brake (101) of said vehicle (100) and configured to interact with the respective faces (101a, 101b) of said disc brake (101) during a vehicle braking event.

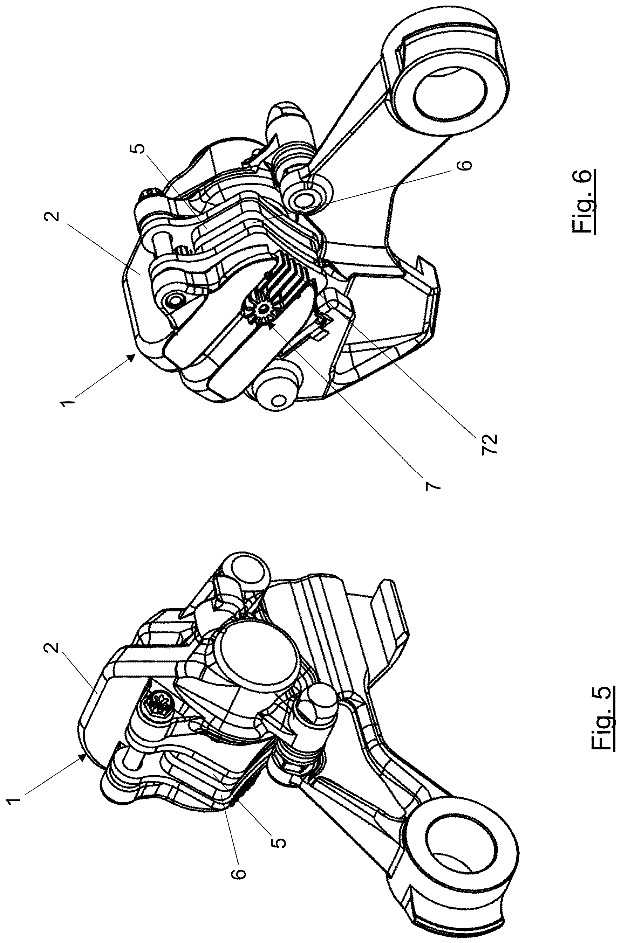

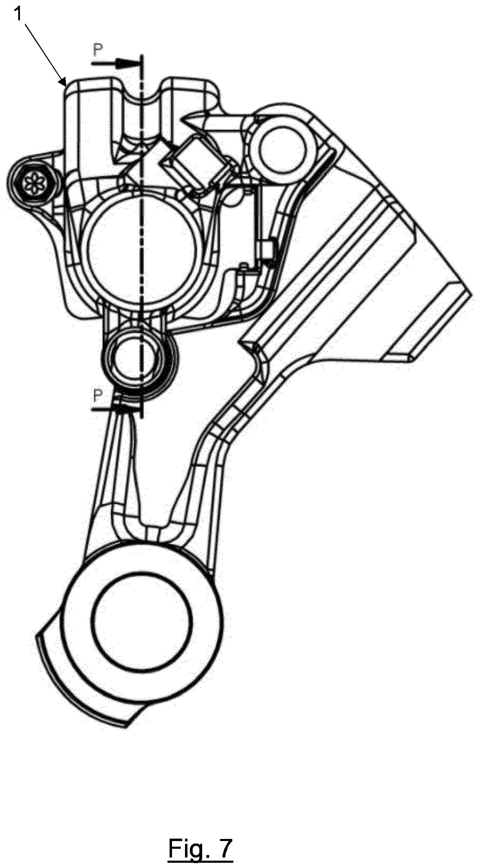

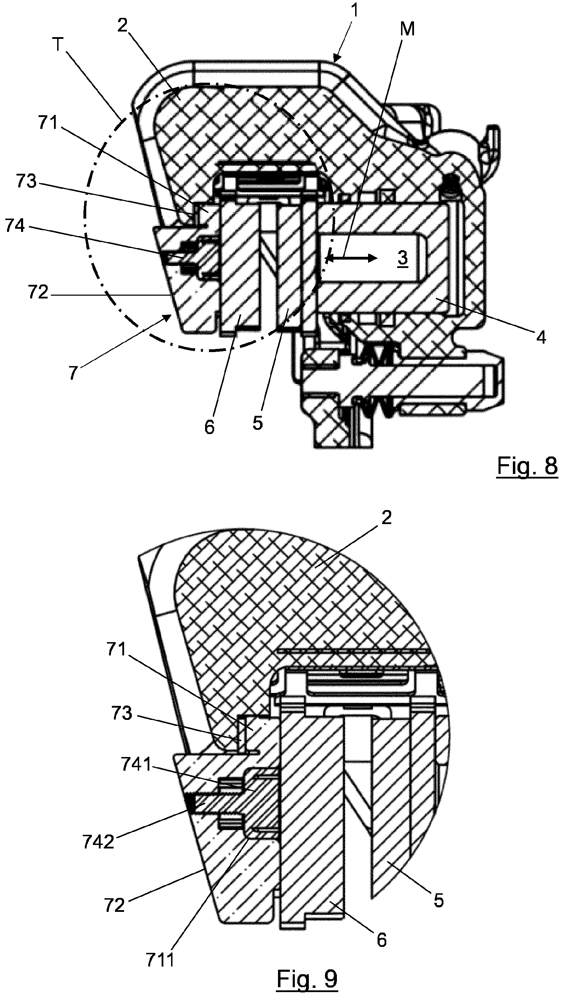

Figures 5-7 show several views of the brake caliper (1) of the present invention. As can be seen, the brake caliper (1) comprises:
- a caliper body (2) housing at least one piston (3) mounted in a cylinder (4), Figure 8, wherein said piston (3) is configured to be actuated by a hydraulic fluid;
- a first friction pad (5) and a second friction pad (6) configured to receive the disc brake (101) between them, wherein the at least one piston (3) is configured to urge the friction pads (5, 6) towards respective faces (101a, 101b) of the disc brake (101) during a vehicle braking event; and
- heat dissipation means (7) configured to dissipate the heat produced by the friction of the friction pads (5, 6) with the disc brake (101) during said vehicle braking event.

Figures 8-9 show respectively a cross-section and a detail of the brake caliper (1) of the present invention. As can be seen, the brake caliper (1) is a floating brake caliper. The first friction pad (5) is configured to move with the piston (3), having a relative movement (M) with the caliper body (2), and the second friction pad (6) is fixed to the caliper body (2). The caliper body (2) is axially guided in a displaceable manner, so that when the piston (3) pushes the first friction pad (5) towards a face (101a) of the disc brake (101), in reaction, it causes the movement of the second friction pad (6) towards an opposite face (101b) of the disc brake (101).

As can be seen in Figures 8 and 9, the heat dissipation means (7) comprise:
- a heat accumulation portion (71) placed in contact with the second friction pad (6), configured to accumulate the heat produced in said second friction pad (6); and
- a heat dissipation portion (72) in contact with the heat accumulation portion (71), configured to dissipate the heat accumulated in the heat accumulation portion (71) towards the outside of the brake caliper (1).

Thus, the heat dissipation means (7) of the present invention perform the double function of accumulating the heat from the inside of the brake caliper (1), and of dissipating said heat towards the outside of the brake caliper (1).

The heat accumulation portion (71) has a size which is similar or smaller than the second friction pad (6), to maximise the transfer heating without significatively increase the overall dimensions of the brake caliper (1).

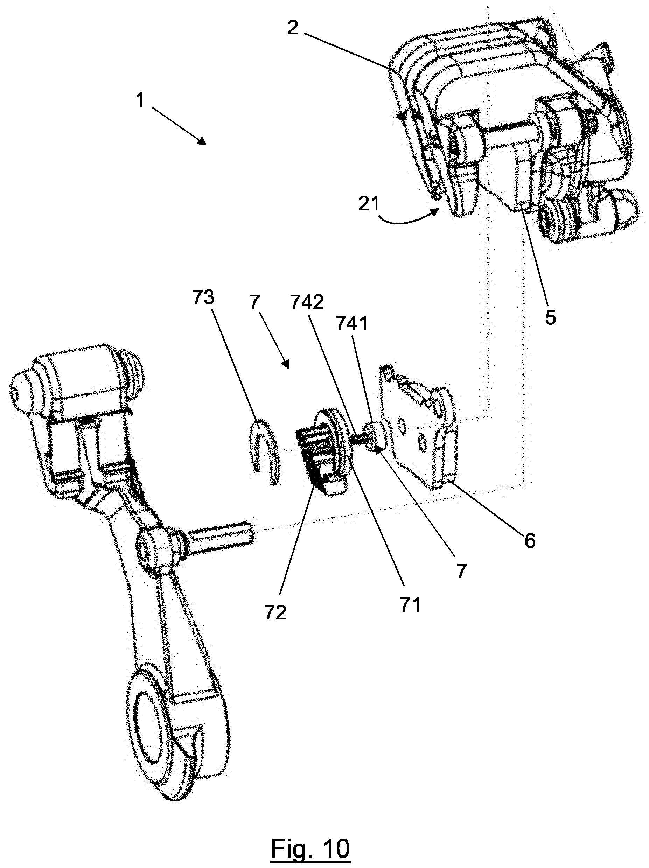

Figure 10 shows an exploded view of the brake caliper (1) of the present invention. As can be seen, the caliper body (2) comprises an opening (21) configured to lodge the heat dissipation means (7). This configuration facilitates the integration and assembly of the heat dissipation means (7) in the caliper body (2), without increasing the overall dimensions of the brake caliper (1).

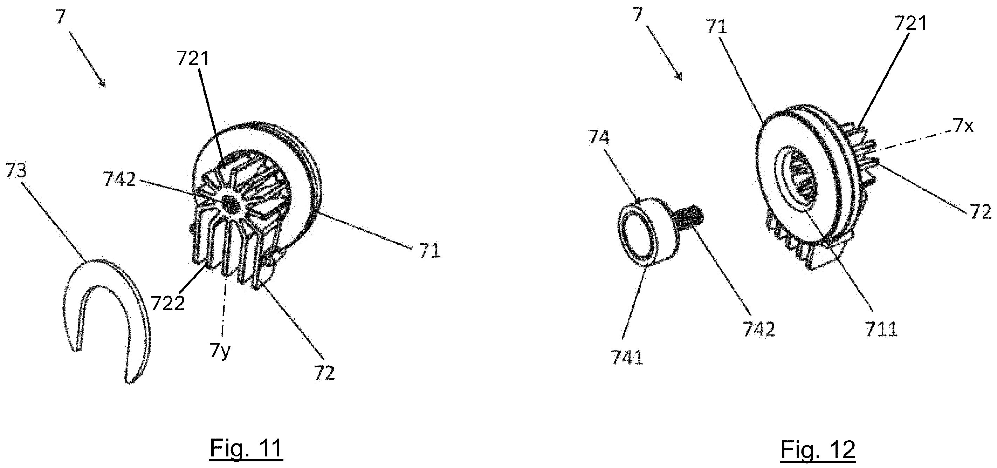

Figures 11 and 12 show two exploded views of the heat dissipation means (7) of the brake caliper (1) of the present invention.

As can be seen in more detail, the heat accumulation portion (71) is formed by a disc-shaped or cylindrical-shaped portion, provided with a flat surface which assures a maximum contact area with the second friction pad (6).

The heat dissipation portion (72) is formed by a heat sink provided with a plurality of cooling fins (721, 722), thus increasing the dissipation of the heat accumulated in the heat accumulation portion (71) towards the outside of the brake caliper (1).

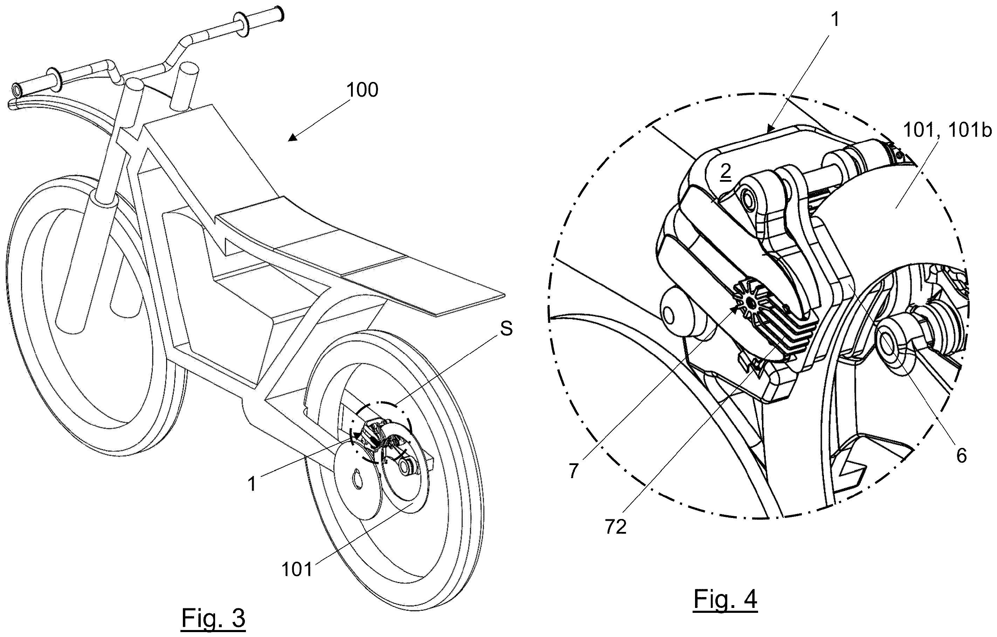

The heat dissipation portion (72) comprises a first group of cooling fins (721) axially distributed in a first direction (7x), and a second group of cooling fins (722) parallelly distributed in a second direction (7y), wherein the first direction (7x) is perpendicular to the second direction (7y). In this manner, a greater number of cooling fins (721, 722) can be distributed in the heat dissipation portion (72) in a smaller space, thus making the heat dissipation means (7) still more compact and not affecting the overall dimensions of the brake caliper (1). In addition, said distribution of the cooling fins (721, 722) also guarantees the heat transfer towards the external environment, Figures 4 and 6.

The heat dissipation means (7) further comprise:
- a heat insulating element (73) placed between the heat accumulation portion (71) and the caliper body (2), configured to insulate the caliper body (2) from the heat accumulation portion (71), Figure 9.

The heat insulating element (73) limits the contact area between the heat dissipation means (7) and the caliper body (2), thus preventing that the heat accumulated in the heat accumulation portion (71) is transferred to the caliper body (2), Figure 9.

The heat insulating element (73) is formed by a fiber sheet or other insulating material.

The heat insulating element (73) is U-shaped. This configuration allows to selectively insulate a specific part of the heat dissipation means (7), i.e. the heat accumulation portion (71), from the caliper body (2), Figures 9 and 10. Thus, leaving exposed another part of the heat dissipation means (7), i.e. the heat dissipation portion (72), to the outside of the brake caliper (1), Figures 8 and 9. The U-shaped configuration is also provided with a considerable flat surface that further limits the contact area between the heat dissipation means (7) and the caliper body (2).

The heat dissipation means (7) further comprise an anchoring element (74) having:
- a magnet (741) configured to be arranged in the heat accumulation portion (71); and
- a threaded end (742) protruding from said magnet (741) configured to be screwed in the heat dissipation portion (72).

The magnet (741) is configured to be in contact with the second friction pad (6), interacting magnetically with the same, to guarantee permanent contact between said friction pad (6) and the heat accumulation portion (71), Figures 8 and 9. In addition, this configuration of the anchoring element (74) also facilitates the assembly of the heat dissipation means (7) in the brake caliper (1).

The magnet (741) is cylindrical-shaped and configured to be lodged on a central recess (711) of the heat accumulation portion (71), Figure 9. This configuration facilitates the integration of the magnet (741) in the heat dissipation means (7) and makes them more compact and smaller.

The heat accumulation portion (71) and the heat dissipation portion (72) are integrally made, forming one single piece. This configuration makes the heat dissipation means (7) more compact and robust, it favours the heat transfer between both portions (71, 12), and it also facilitates the assembly of the heat dissipation means (7) in the brake caliper (1).

The heat accumulation portion (71) and the heat dissipation portion (72) are made of titanium, stainless steel, or brass, or from other metallic materials, or other materials with an appropriate thermal conductivity.

## Claims

1. A brake caliper for a disc brake of a vehicle, comprising:
- a caliper body (2) housing at least one piston (3);
- a first friction pad (5) and a second friction pad (6) configured to receive a disc brake (101) between them, wherein the at least one piston (3) is configured to urge the friction pads (5, 6) towards respective faces (101a, 101b) of the disc brake (101) during a vehicle braking event; and
- heat dissipation means (7) configured to dissipate the heat produced by the friction of the friction pads (5, 6) with the disc brake (101) during said vehicle braking event;
said brake caliper (1) being **characterized in that** the heat dissipation means (7) comprise:
- a heat accumulation portion (71) placed in contact with at least one friction pad (5, 6), configured to accumulate the heat produced in said friction pad (5, 6); and
- a heat dissipation portion (72) in contact with the heat accumulation portion (71), configured to dissipate the heat accumulated in the heat accumulation portion (71) towards the outside of the brake caliper (1).

2. The brake caliper according to claim 1 **characterized in that** the heat accumulation portion (71) has a size which is similar or smaller than the at least one friction pad (5, 6).

3. The brake caliper according to any of claims 1 to 2 **characterized in that** the heat accumulation portion (71) is formed by a disc-shaped or cylindrical-shaped portion.

4. The brake caliper according to any of claims 1 to 3 **characterized in that** the heat dissipation portion (72) is formed by a heat sink provided with a plurality of cooling fins (721, 722).

5. The brake caliper according to claim 4 **characterized in that** the heat dissipation portion (72) comprises:
- a first group of cooling fins (721) axially distributed in a first direction (7x); and
- a second group of cooling fins (722) parallelly distributed in a second direction (7y);
wherein the first direction (7x) is perpendicular to the second direction (7y).

6. The brake caliper according to any of claims 1 to 5 **characterized in that** the heat dissipation means (7) further comprise:
- a heat insulating element (73) placed between the heat accumulation portion (71) and the caliper body (2), configured to insulate the caliper body (2) from the heat accumulation portion (71).

7. The brake caliper according to claim 6 **characterized in that** the heat insulating element (73) is formed by a fiber sheet.

8. The brake caliper according to any of claims 6 to 7 **characterized in that** the heat insulating element (73) is U-shaped.

9. The brake caliper according to any of claims 1 to 8 **characterized in that** the heat dissipation means (7) further comprise an anchoring element (74) having:
- a magnet (741) configured to be arranged in the heat accumulation portion (71); and
- a threaded end (742) protruding from said magnet (741) configured to be screwed in the heat dissipation portion (72);
wherein the magnet (741) is configured to be in contact with the at least one friction pad (5, 6), interacting magnetically with the same, to guarantee permanent contact between said friction pad (5, 6) and the heat accumulation portion (71).

10. The brake caliper according to claim 9 **characterized in that** the magnet (741) is cylindrical-shaped and configured to be lodged on a central recess (711) of the heat accumulation portion (71).

11. The brake caliper according to any of claims 1 to 10 **characterized in that** the heat accumulation portion (71) and the heat dissipation portion (72) are integrally made, forming one single piece.

12. The brake caliper according to any of claims 1 to 11 **characterized in that** the heat accumulation portion (71) and the heat dissipation portion (72) are made of titanium, stainless steel, or brass.

13. The brake caliper according to any of claims 1 to 12 **characterized in that** the first friction pad (5) is configured to move with the piston (3), having a relative movement (M) with the caliper body (2); **and in that** the second friction pad (6) is fixed to the caliper body (2), wherein the heat accumulation portion (71) is placed in contact with the second friction pad (6).

14. The brake caliper according to any of claims 1 to 13 **characterized in that** it is a floating brake caliper.

15. The brake caliper according to claim 14 **characterized in that** the caliper body (2) is axially guided in a displaceable manner, so that when the piston (3) pushes the first friction pad (5) towards a face (101a) of the disc brake (101), in reaction, it causes the movement of the second friction pad (6) towards an opposite face (101b) of the disc brake (101).

16. The brake caliper according to any of claims 1 to 15 **characterized in that** the caliper body (2) comprises an opening (21) configured to lodge the heat dissipation means (7).
